# EUROPEAN PATENT SPECIFICATION

(11) **EP 3 845 890 B1**
(45) Date of publication and mention of the grant of the patent: **03.04.2024**
(21) Application number: 19425101.3
(22) Date of filing: 31.12.2019
(51) Int. Cl.: G01N 21/954, G01N 21/88

(54) **TOOL FOR VISUAL INSPECTION OF THE INTERIOR OF COMBUSTION CHAMBERS OF GAS TURBINES**
WERKZEUG ZUR VISUELLEN INSPEKTION DES INNENRAUMS VON BRENNKAMMERN VON GASTURBINEN
OUTIL D'INSPECTION VISUELLE DE L'INTÉRIEUR DE CHAMBRES DE COMBUSTION DE TURBINES À GAZ

(43) Date of publication of application: 07.07.2021
(73) Proprietor: ANSALDO ENERGIA S.p.A., 16152 Genova (IT)
(72) Inventor: Pignone, Enrico, 16152 Genova (IT); Oliva, Maximiliano, 16152 Genova (IT)
(74) Representative: Studio Torta S.p.A.

(56) References cited:
- US-A1- 2010 177 191
- US-A1- 2015 053 025
- US-A1- 2017 031 492
- US-B2- 8 602 722
- US-B2- 9 255 526

## Description

### TECHNICAL FIELD

The present invention relates to a tool for visual inspection of the interior of combustion chambers of gas turbines.

### BACKGROUND

As it is known, combustion chambers of gas turbines are provided with heat shields that protect the structure of the machines form extremely high temperatures that are reached in operation and that may exceed 1000°C. Also the heat shields, however, may suffer damages from being continuously exposed to thermal stress and require regular inspection and maintenance if critical defects are detected. In fact, not only defects in the heat shields dramatically reduce effectiveness of the protecting, but a breaking of a portion of the heat shield may also cause catastrophic damage to the downstream parts of the machine, especially the turbine section. The risk of catastrophic damage is even greater for combustion chambers in which the heat shield is formed by ceramic tiles. In these cases, cracks may expand and lead to sudden collapse of part or of the whole tile structure. Hard blocks may thus enter the flow channel and cause major damages.

Routine inspection of the state of the heat shield is therefore crucial, so that defects may be identified at an early stage and a follow-up and maintenance program may be set up to prevent adverse events. Moreover, in the case of an automatic shutdown event (by the gas turbine protection system) following the detection of high accelerations, inspection of the interior of the combustion chamber is mandatory. This is due, because, in this case, the probability that the ceramic tiles may have been damaged by high accelerations is not negligible. Despite importance of the issue, inspection is in most cases is carried out visually by highly trained operators of the gas turbine manufacturer (OEM) (so called fact-finders) with very poor support of aiding tools. In order to search defects, operators use a hand-held light sources (e.g. a torch) to illuminate the tiles from different angles and look for surface effects, such as shadows or light lines. Such effects are in fact indicative of irregularities which are not expected in intact tiles. As a result, the outcome of the inspection is strongly dependent on the skill of the operators. In the absence of a fact finder of the gas turbine manufacturer (OEM), the outcome of the inspection is not sufficiently predictable and repeatable. Waiting for the availability of a fact finder specialist lengthens the restart time of the plant, thus causing economic damage due to lack of production. Using operators already available on site, mitigation of risk may not be satisfactory.

US 2010/177191 A1 discloses a portable inspection-aid tool for aiding inspection of combustion chambers of gas turbines. The tool comprises a frame, internally delimiting an inspection window and an image-capture assembly, connected to the frame and oriented to capture images through the inspection window. Light sources are attached to the frame around the inspection window and are configured to directionally emit light out of the inspection window so that only scattered light reaches the image-capture assembly. A hand-hold portion allows hold by a user. Other examples of known inspection tools are disclosed in US 9 255 526 B2, US 8 602 722 B2 and US 2017/031492 A1.

### SUMMARY OF THE INVENTION

It is an aim of the present invention to provide a tool which allows to overcome or to at least attenuate the limitations described.

According to the present invention, there is provided an inspection-aid kit comprising a portable inspection-aid tool for aiding inspection of combustion chambers of gas turbines, the inspection-aid tool comprising:
a frame, internally delimiting an inspection window;
an image-capture assembly, connected to the frame and oriented to capture images through the inspection window;
a plurality of light sources attached to an inner surface of the frame around the inspection window and configured to directionally emit light in accordance with a dark-field illumination pattern out of the inspection window and away from the image-capture assembly;
an on-board control unit, configured to selectively activate the light sources and to synchronize image-capture of the image-capture assembly with activation of the light sources; and
a hand-hold portion for hold by a user;
characterized by a piece of garment and strings connecting the inspection-aid tool to the piece of garment, whereby the inspection-aid tool can be hung to the piece of garment when the piece of garment is worn by a user.
Users are allowed to freely move hands when there is a need to change position for inspection of another part of the heat shield, which is extremely convenient in such a narrow space as a combustion chamber of a gas turbine.

The portable tool allows a user to easily capture images of every single tile in a heat shield of a combustion chamber of a gas turbine. Size and weight of the tool may be easily designed to make use of the tool simple, convenient and not tiring for the user, who has to work in narrow and uncomfortable space. Images are captured in dark-field illumination conditions, which are favorable for automatic image processing for the purpose of searching surface defects. Thus, the process of identifying surface defects is made substantially independent of the skill of the user and therefore is more predictable and repeatable. Moreover, there is no need to perform heavy image processing directly in the on-board control unit. Inspection images may be either easily sent to a remote control unit via a wireless connection stored or in the on-board control unit and downloaded to the remote control unit once inspection in completed. Thus, functionality of the on-board control unit may be limited to control of image-capture and dark-field illumination pattern and may be accomplished through common, quite inexpensive and small devices such as a tablet computer or even a smartphone. On the other hand, image processing may be carried out through sophisticated tools at a remote processing station, where processing power is not an issue. Therefore, search of surface defect is not only repeatable, but may also be extremely accurate. Follow-up and maintenance of combustion chambers may be significantly improved.

According to an aspect of the invention, the tool comprises a supporting structure connected to the frame and configured to support the image-capture assembly in an inspection position, in which a view field of the image-capture assembly includes at least part of the inspection window.

The image-capture assembly is thus supported in the correct capture position with respect to the frame. The position may be calibrated and adjusted in a laboratory or workroom, so it can be extremely accurate. The user only needs positioning the frame with respect to the tile, what is simple due to the ease of handling the tool.

According to an aspect of the invention, the supporting structure comprises a mounting member and struts having opposite ends connected to the frame and to the mounting member, and wherein the image-capture assembly is connected to the mounting member.

The supporting structure has simple, yet effective configuration to maintain the image-capture assembly in the correct position.

According to an aspect of the invention, the mounting member is connected to the ends of the struts so that the mounting member is movable toward and away from the frame between a retracted position, in which the mounting member is closer to the frame, and an extracted position, in which the mounting member is more distant from the frame and the image-capture assembly is in a position of use.

The compact configuration of the tool helps users when entering or moving through the combustion chambers, which are very narrow. Reduced size allows greater freedom of movement. The tool may then be placed in the configuration of use when the user is ready to begin image acquisition.

According to an aspect of the invention, the on-board control unit is provided with an on-board display and is configured to show images viewed by the image-capture assembly on the on-board display.

The display helps and may guide users in carrying out inspection. The display may be provided with live-preview functionality, which aids in fine positioning of the tool. The display may be also a touch-screen, thus also providing an easy-to-use input and control interface.

According to an aspect of the invention, the on-board display is connected to the supporting structure by a joint that allows rotation about a first rotation axis and a second rotation axis, perpendicular to the first rotation axis.

The display can be rotated to be easily visible and accessible at any location in a combustion chamber. Since combustion chambers offer very narrow inside space, orientation of the display may result very helpful for users.

According to an aspect of the invention, the hand-hold portion is configured to allow four-finger hold of the on-board display, thereby leaving user's thumb free for providing commands through command input items.

The tool may be positioned and controlled by a single hand, thus leaving one hand of the user free e.g. for keeping balance, which is extremely convenient to work in the very narrow space of a combustion chamber of a gas turbine. The arrangement is not tiring for users and makes handling of the tool easier.

According to an aspect of the invention, the hand-hold portion comprises at least one of:
a handgrip defined by a portion of the supporting structure;
a mounting plate and a hand-hole, in the form of an elongated through opening in the mounting plate that extend along a side of the on-board control unit and is configured to allow a user to insert fingers and hold the on-board display and the mounting plate by gripping a face of the mounting plate opposite to the on-board display;
a pocket a handle on a back surface of a casing of the on-board control unit, wherein the pocket is open along a side of the on-board control unit and is configured to allow a user to insert fingers and hold the on-board control unit by gripping a back face of the on-board control unit;
a mounting plate and a handle on a face of the mounting plate, wherein the handle extends along sides of the mounting plate and of the on-board control unit and is configured to allow a user to grip the handles by index, middle, ring and little fingers and hold the on-board control unit and the mounting plate by a single hand;
a handle on a face of the casing of the on-board control unit, wherein the handle extends along a side of the on-board control unit and is configured to allow a user to grip the handles by index, middle, ring and little fingers and hold the on-board control unit by a single hand.

According to an aspect of the invention, the image-capture assembly has an optical axis and the light sources are oriented to emit light in directions such that light reflected by an even surface perpendicular to the optical axis is not received by the image-capture assembly.

According to an aspect of the invention, the light sources comprises LED sources and are arranged in a plurality of rings around the inspection window, wherein the rings of light sources are located at respective axial positions according to the optical axis and light sources of each ring are activatable independently of light sources of the other rings.

With the configuration of the light sources and the optical axis of the image-capture assembly, dark-field illumination is exploited to emphasize surface defects, which may be automatically identified by image processing.

According to an aspect of the invention, the image-capture assembly comprises an image sensor arranged to receive light through the inspection window.

The arrangement allows to capture images of the heat-shield tiles with very low margin of error for positioning, focusing and stability during image acquisition.

According to an aspect of the invention, the image-capture assembly comprises a plurality of image sensors arranged adjacent to one another to receive light through respective portions of the inspection window, the portions of the inspection window being at least in part distinct from one another.

Since each sensor only portions of the target image (tile) need be within the field of view of each sensor, the sensors may be located closer to the target, which results in a more compact arrangement.

According to an aspect of the invention, the frame comprises a lateral wall converging toward the image-capture assembly.

Inclination of the lateral wall favors mounting the light sources with appropriate angle to provide dark-field illumination pattern.

According to an aspect of the invention, the tool comprises an orientation sensor configured to detect orientation in space, wherein the wherein the on-board control unit is configured to associate the images capture by the image-capture assembly with orientation data from the orientation sensor at the time of capture.

The tiles of an annular combustion chamber can be univocally identified by their orientation in three-dimensional space. Orientation data associated to images allow to locate the tiles without error. Images may be processed off-line and stored and retrieved at a later stage if required. It is always possible to correctly associate images with real tiles based on orientation data.

According to an aspect of the invention, the on-board control unit comprises a communication module configured for communication to the outside, in particular through wireless communication.

Images may be in safe and easy manner to a remote control unit with sufficient computing power to perform sophisticated image processing. The on-board control unit does not need to host heavy processing algorithms and therefore may be provided as a relatively simple and inexpensive device, to the benefit of cost and ease of use.

### BRIEF DESCRIPTION OF THE DRAWINGS

The present invention will now be described with reference to the accompanying drawings, which show some non-limitative embodiment thereof, in which:
- figure 1 is a side view, with parts removed for clarity, of a portable inspection-aid tool for aiding inspection of combustion chambers of gas turbines used in an inspection-aid kit in accordance with an embodiment of the present invention;
- figure 2 is a rear view of the tool of figure 1;
- figure 3 is a front view of the tool of figure 1;
- figure 4 is a bottom view of the tool of figure 1;
- figure 5 is a simplified depiction of sensor arrangement of the tool of figure 1;
- figure 6 is a simplified depiction of sensors arrangement of a portable inspection-aid tool for aiding inspection of combustion chambers of gas turbines for use in an inspection-aid kit in accordance with another embodiment of the present invention;
- figure 7 is a simplified block diagram of an inspection system for the inspection of combustion chambers of gas turbines including the tool of figure 1;
- figure 8 is a front view of a portable inspection-aid tool for aiding inspection of combustion chambers of gas turbines for use in an inspection-aid kit in accordance with another embodiment of the present invention;
- figure 9 is a side view of the tool of figure 8;
- figure 10 is a rear view of a portable inspection-aid tool for aiding inspection of combustion chambers of gas turbines for use in an inspection-aid kit in accordance with a further embodiment of the present invention;
- figure 11 is a side view of the tool of figure 10;
- figure 12 is a rear view of a portable inspection-aid tool for aiding inspection of combustion chambers of gas turbines for use in an inspection-aid kit in accordance with a further embodiment of the present invention;
- figure 13 is a perspective view of an enlarged detail of the tool of figure 12;
- figure 14 is a perspective view of a detail of a portable inspection-aid tool for aiding inspection of combustion chambers of gas turbines for use in an inspection-aid kit in accordance with a further embodiment of the present invention;
- figure 15 shows the tool of figure 1 in use in a combustion chamber of a gas turbine; and
- figure 16 is a simplified view of an inspection-aid kit in accordance with an embodiment of the present invention and including the tool of figure 1.

### DETAILED DESCRIPTION OF EXEMPLARY EMBODIMENTS

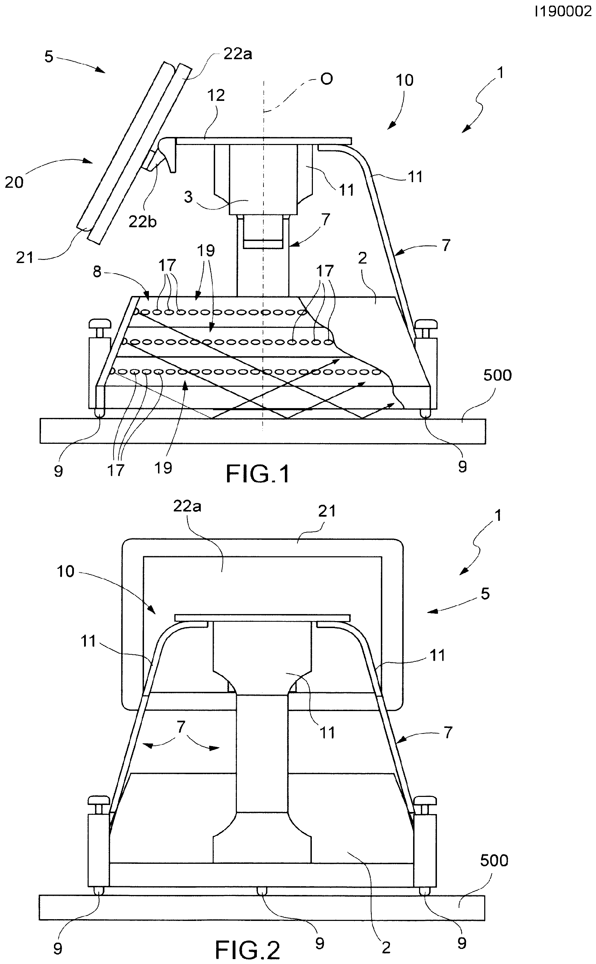

With reference to figures 1-4, a portable inspection-aid tool for aiding inspection of combustion chambers of gas turbines is designated by numeral 1. The inspection-aid tool 1 comprises a frame 2, an image-capture assembly 3, an on-board control unit 5 and handgrips 7.

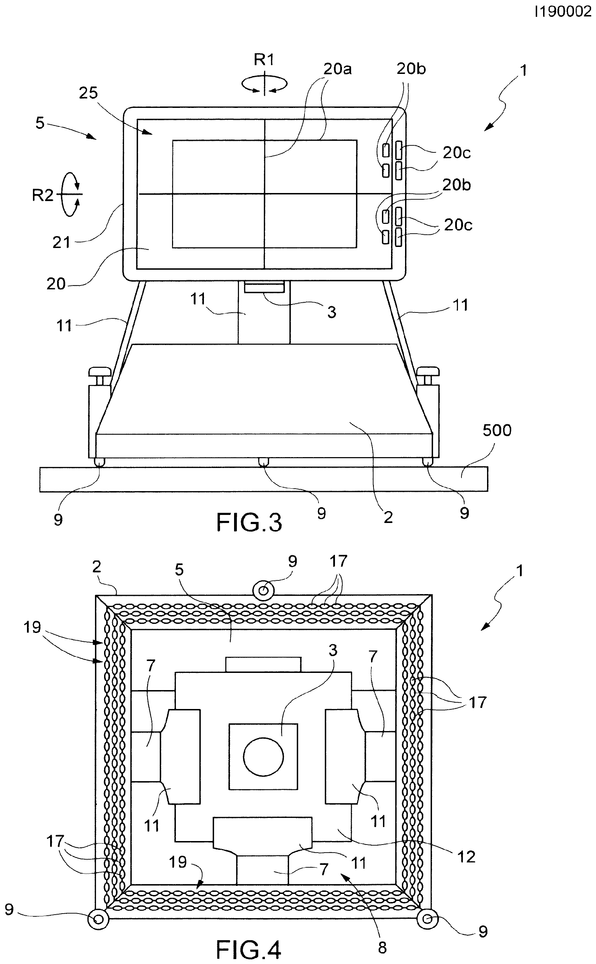

The frame 2 extends along a closed path and internally delimits an inspection window 8. In the example of figures 1-4, the frame 2 is quadrangular (see figure 4) and the inspection window 8 is slightly wider than a tile 500 of a heat shield of a gas turbine (figure 1). Tiles 500 typically have sides of around 15 cm to 20 cm. For example, the frame 2 is squared and a side of the inspection window 8 is 22 cm. The frame 2 need neither be rectangular, however, nor extend along a strictly closed path. For example, in the frame could be circular, oval or C-shaped or have any other shape in accordance with design preferences.

Also, the frame 2 has a lateral wall converging toward the image-capture assembly 3, e.g. in the form of a pyramidal frustum and is provided with adjustable pins 9 for coupling to a surface to be inspected.

The image-capture assembly 3 is connected to the frame 2 by a supporting structure 10 and is oriented so that a view field of the image-capture assembly 3 includes at least part of the inspection window 8. Hence, images are captured through the inspection window 8. In one example, the supporting structure 10 comprises a plurality of struts 11, e.g. two or three, as in the example described herein, and a mounting plate 12. The struts 11 have opposite ends connected to the frame 2 and to the mounting plate 12, which is supported centrally with respect to the inspection window 8 on one side of the frame 2 opposite to the pins 9. The struts 11 are shaped to define the handgrips 7, which are single-hand handgrips. In other examples not shown herein, handgrips 7 may be formed on some or one only of the struts 11, or formed as handles attached e.g. to the frame 2.

The image-capture assembly 3 is connected to the mounting plate 12 and is oriented with a lens system 15 toward the frame 2, so that light is received and images may be captured through the inspection window 8.

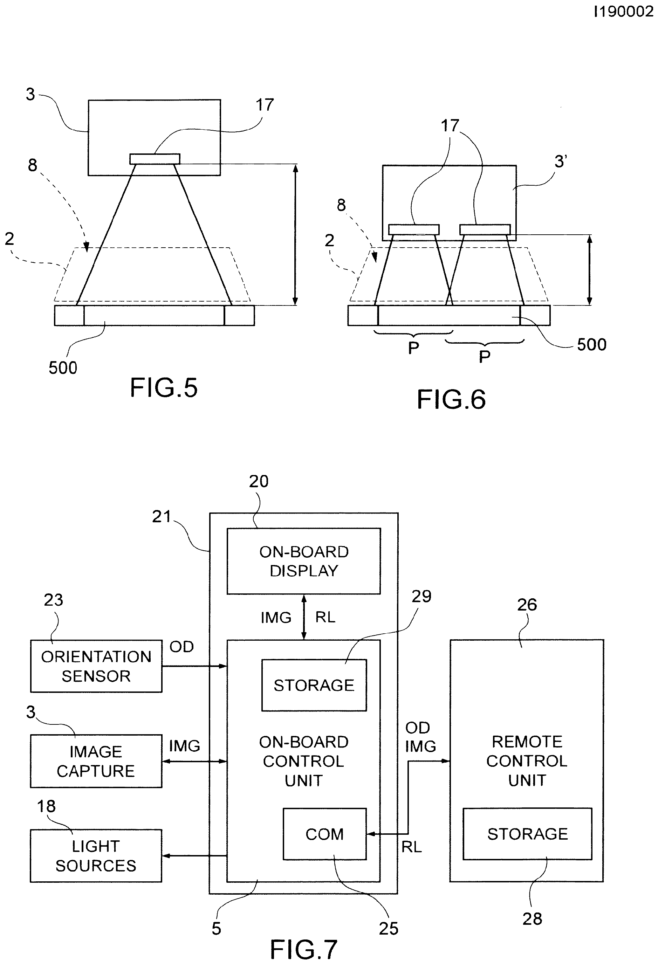

In one example (see also figure 5), the image-capture assembly 3 comprises a single image-capture device with a single image sensor 17 (see figure 2) centered with respect to the inspection window 8. In another example (figure 6), the image-capture assembly, here indicated by 3', comprises a plurality of image sensors 17 arranged adjacent to one another to receive light through respective portions P of the inspection window 8. The portions P of the inspection window 8 corresponding to respective image sensors 17 are at least in part distinct from one another and may at most overlap along respective common edges.

With reference to figures 1 and 4, the tool 1 comprises also a plurality of light sources 18 attached to an inner surface 2a of the frame 2 around the inspection window 8 and configured to directionally emit light in accordance with a dark-field illumination pattern out of the inspection window 8 and away from the image-capture assembly 3.

The light sources 18 may be e.g. LED sources and in one example are organized in rings 19 around the inspection window 8 (three in the example of figures 1-4). The rings 19 of light sources 18 are located at respective different axial positions according to an optical axis O of the image-capture assembly 3 (see figure 1). Moreover, the light sources 18 of each ring 19 are activatable independently of light 18 sources of the other rings 19. In one example, the light sources 18 are activatable independently from each other even within the same ring 19 of light sources 18.

The light sources 18 are oriented to emit light in directions such that light reflected by an even surface perpendicular to the optical axis O is not received by the image-capture assembly 3. Only light scattered by surface defects, such as cracks, scratches or engravings, may be detected by the image-capture assembly 3. The even surface may be a tile of a heat shield of a gas turbine.

The on-board control unit 5, e.g. a tablet computer, a smartphone or a dedicated control device, is coupled in communication with the image-capture assembly 3 and the light sources 18 and is configured to selectively activate the light sources 18 in accordance with a dark-field illumination pattern. The on-board control unit 5 is further configured to synchronize image-capture of the image-capture assembly 3 with activation of the light sources 18. Parameters of image-capture such as exposure time and diaphragm opening may be controlled by the on-board control unit 5, too.

The on-board control unit 5 is provided with an on-board display 20 and is configured to show images viewed by the image-capture assembly 3 on the on-board display 20. The on-board display 20 and the on-board control unit 5 may be integrated in a single casing 21 (see also figure 7), as in the examples illustrated herein, or also be provided as a stand-alone display coupled in communication with the on-board control unit 5. In one example, the image-capture assembly 3 is provided with a live-preview function and live images may be shown on the on-board display 20, which may thus be used as a viewfinder to achieve fine and accurate positioning of the tool 1 with respect to tiles to be inspected. Reference lines 20a may be displayed on the on-board display 20 to further improve accuracy of the positioning (figure 3). The on-board display 20 may be a touch-screen and may be used also as an input interface for user's commands, such as shoot command.

The on-board control unit 5 and the on-board display 20 are connected to the supporting structure 10 by a mounting plate 22a and a joint 22b that allows rotation of the mounting plate 22a and the on-board display 20 about two perpendicular rotation axes R1, R2, to make use of the tool 1 easier in the very narrow space of a combustion chamber of a gas turbine.

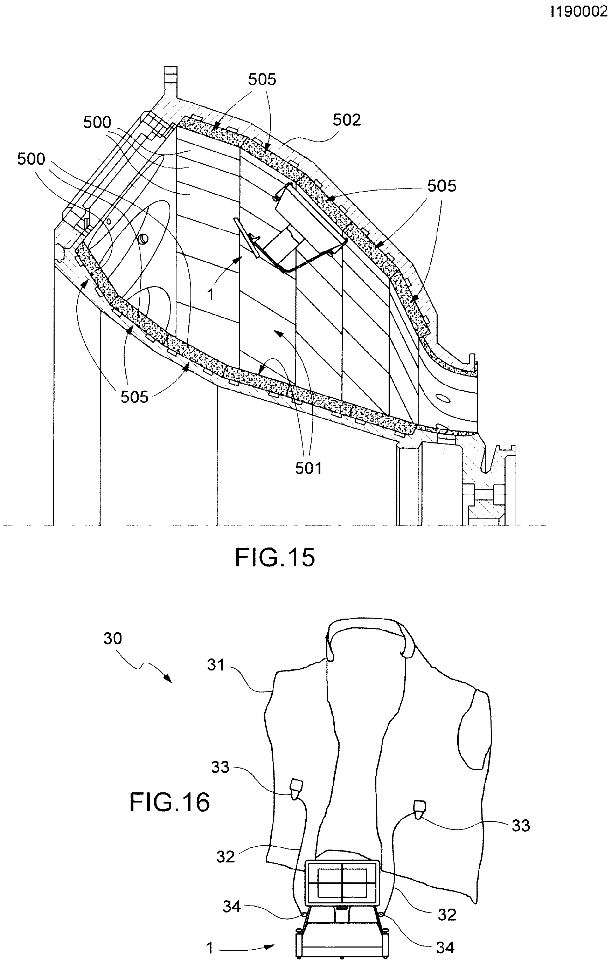

The tool 1 is also provided with an orientation sensor 23 (figure 7) rigidly fixed to the frame 2 and configured to detect orientation in space with respect to three axes. The orientation sensor 23 may be, for example, a three-axis accelerometer, inclinometer or gyroscope, or a combination of single-axis or two-axis accelerometers, inclinometers or gyroscopes. Moreover, the orientation sensor 23 may be attached directly to the frame 2, or to the supporting structure 10 or may be integrated in the on-board control unit 5 and the on-board control unit 5 is in turn rigidly fixed to the supporting structure 10. The on-board control unit 5 is configured to receive 3D orientation data OD from the orientation sensor 23 and to associate inspection images IMG captured by the image-capture assembly 3 with respective 3D orientation data OD received at the time the inspection images IMG are captured. The tiles of an annular combustion chamber, for which the tool 1 is especially beneficial, can be univocally identified by their orientation. As shown in figure 15, in fact, the tiles 500 of the heat shield 501 of a combustion chamber 502 are arranged in adjacent annular arrays 505 about the central axis of the gas turbine. Each array of tiles is identified by unique inclination of the tiles in the axial direction and tiles in each array are in turn identified by their angular position about the central axis.

The on-board control unit 5 comprises a communication module 25 configured for communication to the outside, in particular through wireless communication (see figure 7). In particular, the communication module 25 allows bidirectional communication with a remote control unit 26, which may be e.g. a personal computer, a workstation or a mainframe. The remote control unit 26 is provided with sufficient processing power to perform real-time image processing for search of surface defects in inspection images IMG of heat shield tiles captured by the image-capture assembly 3, based on dark-field illumination assumption. In one example, moreover, the remote control unit 26 is configured to perform risk assessment analysis for tiles of inspection images IMG, once surface defects have been identified. For example, a level of risk in a range may be associated to tiles depending on number, location and dimension of detected defects, such as cracks. A risk level RL is returned to the tool 1 and shown on the on-board display 20, so that the user is allowed to mark tiles for maintenance or follow-up as required. The inspection images IMG may also be stored in a remote storage device 28 of the remote control unit 26 for off-line processing and inspection history recording, as well as in an on-board storage device 29 of the on-board control unit 5, at least temporarily. In the absence of wireless connections, for example, inspection images IMG may downloaded to the remote control unit 26 once the inspection is completed for off-line processing.

The weight of the tool 1 may be typically few kilograms, e.g. 1 or 2 kg, and can be easily hold and positioned for inspection with a single hand even at difficult locations, due also to the small dimensions, the shape and the provision of the handgrip.

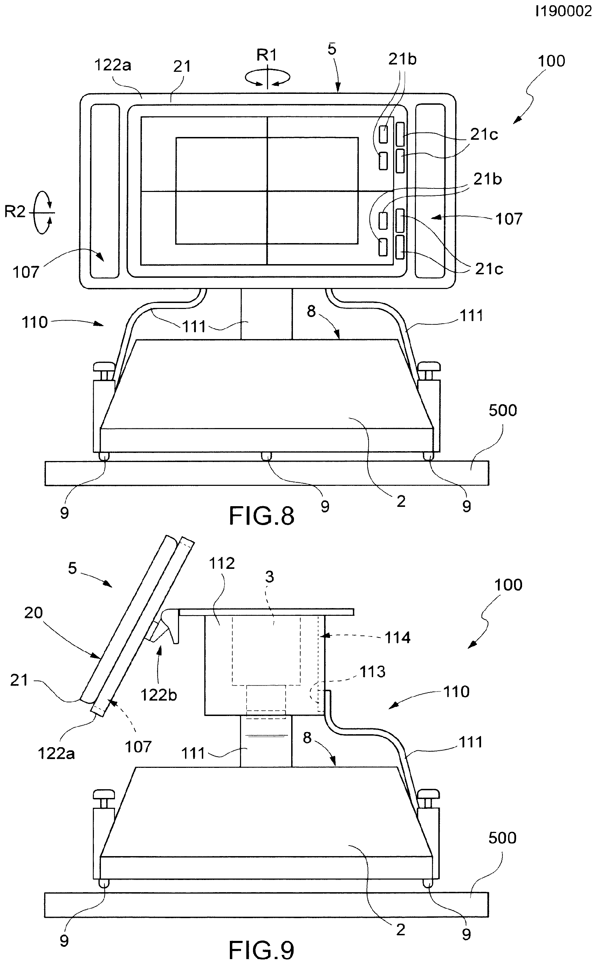

According to figures 8 and 9, where parts identical to parts already described are designated by the same reference numbers, a portable inspection-aid tool 100 for aiding inspection of combustion chambers of gas turbines comprises the frame 2, the image-capture assembly 3, the on-board control unit 5 with the on-board display 20, the light sources 18 and the orientation sensor 23, here not shown.

The image-capture assembly 3 is connected to the frame 2 by a supporting structure 110 and is oriented so that a view field of the image-capture assembly 3 includes at least part of the inspection window 8. Hence, images are captured through the inspection window 8. The supporting structure 110 comprises a plurality of struts 111 and a mounting member 112, which may be in the form of a cup-shaped body located at ends of the struts 111 and holds the image-capture assembly 3. The mounting member 112 may be slidably connected to ends of the struts 111 to be movable toward and away from the frame 2. For example, the ends of the struts 111 may be provided with tabs 113 which engage guides 114 on the mounting member 112. The mounting member 112 may have a retracted position for transport, in which the mounting member 112 is closer to the frame 2 and the tool 100 is more compact, and an extracted position for use, in which the mounting member 112 is more distant from the frame 2 and the image-capture assembly 3 is in the correct operative position. As an alternative the sliding connection of the tabs and guides, telescopic components may be included.

The on-board control unit 5 and the on-board display 20 are connected to the supporting structure 10 by a mounting plate 122a and a joint 122b that allows rotation of the mounting plate 122a and the on-board display 20 about two perpendicular rotation axes R1, R2.

The a mounting plate 122a is wider than a casing 21 of the on-board control unit 5 and has hand-holes 107 along opposite sides of the on-board control unit 5. Hand-holes 107 are elongated through openings that extend parallel to respective sides of the casing 21 of the on-board control unit 5. The hand-holes 107 are configured to allow a user to insert index, middle, ring and little fingers and hold the on-board control unit 5 and the mounting plate 122a from the back, i.e. by gripping a face of the mounting plate 122a opposite to the on-board control unit 5. At the same time, user's thumb is on the side of the casing 21 with the on-board display 20 and is free for providing commands through real command input items or virtual command input items, such as buttons, keyboard, drop-menus, scroll-bars, input boxes and the like. In particular (see also figure 3), the command input items may be provided as virtual items 20b on a touch-screen or as real items 20c on the casing of the on-board control unit 5. Therefore, the user can put in place, hold and controlling the tool 100 by a single hand, while the other hand is completely free.

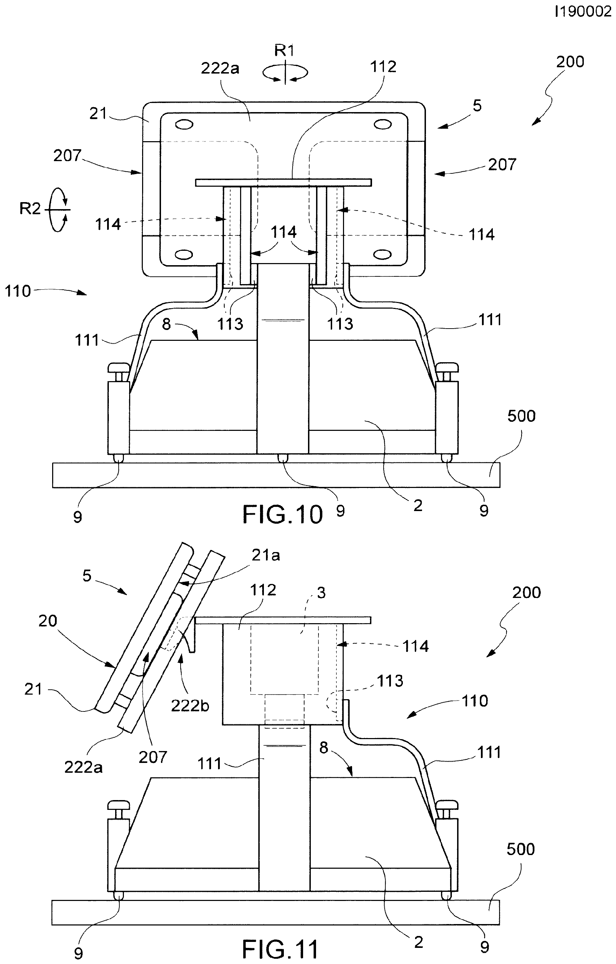

According to the example shown in figures 10 and 11, a portable inspection-aid tool 200 for aiding inspection of combustion chambers of gas turbines comprises the frame 2, the image-capture assembly 3, the on-board control unit 5 with the integrated on-board display 20, the light sources 18 and the orientation sensor 23, here not shown. The image-capture assembly 3 is connected to the frame 2 through the supporting structure 110 of figures 8 and 9. Moreover, the on-board control unit 5 is connected to the supporting structure 110 by a mounting plate 222a and a joint 222b that allows rotation of the mounting plate 222a and the on-board display 20 about two perpendicular rotation axes R1, R2. The on-board control unit 5 is fixed to the mounting plate 222a at a distance therefrom and is provided with pockets 207 on a back surface 21a of the casing 21 in the space between the on-board control unit 5 and the mounting plate 222a. The back surface 21a of the casing 21 is opposite to a face with the on-board display 20. The pockets 207 are open along sides of the on-board control unit 5 and are configured to allow a user to insert index, middle, ring and little fingers and hold the on-board control unit 5 from the back, i.e. by gripping the back face of the on-board control unit 5. User's thumb is on the front side of the on-board control unit 5 with the on-board display 20 and is free for providing commands through real or virtual command input items (not shown), such as buttons, keyboard, drop-menus, scroll-bars, input boxes and the like.

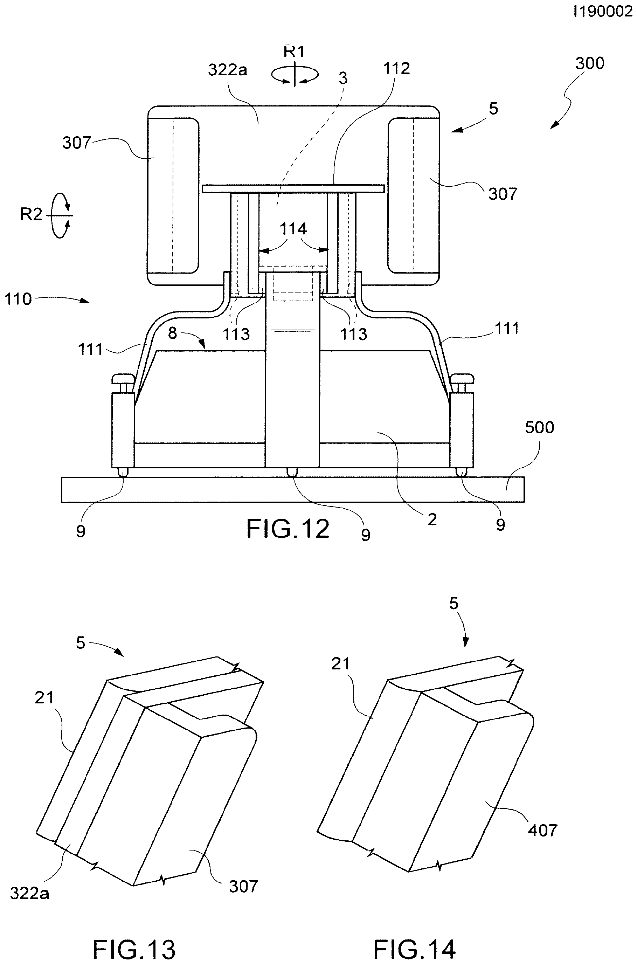

According to the example shown in figures 12 and 13, a portable inspection-aid tool 300 for aiding inspection of combustion chambers of gas turbines comprises the frame 2, the image-capture assembly 3, the on-board control unit 5 with the integrated on-board display 20, the light sources 18 and the orientation sensor 23, here not shown. The image-capture assembly 3 is connected to the frame 2 through the supporting structure 110 of figures 8 and 9. Moreover, the on-board control unit 5 is connected to the supporting structure 110 by a mounting plate 322a and a joint (not shown) that allows rotation of the mounting plate 322a and the on-board display 20 about two perpendicular rotation axes R1, R2.

The on-board control unit 5 is fixed to the mounting plate 322a, which is provided with handles 307 on a back face. The handles 307 extend along sides of the mounting plate 322a and of the on-board control unit 5 and are configured to allow a user to grip the handles 307 by index, middle, ring and little fingers and hold the on-board control unit 5 and the mounting plate 322a by a single hand. At the same time, user's thumb is on the side of the on-board control unit 5 with the on-board display 20 and is free for providing commands through real or virtual command input items (not shown), such as buttons, keyboard, drop-menus, scroll-bars, input boxes and the like. In one example, handles (407 in figure 14) could be directly attached to the casing 21 of the on-board control unit 5.

With reference to figure 16, an inspection-aid kit 30 for aiding inspection of combustion chambers of gas turbines in accordance with an embodiment of the present invention comprises the inspection-aid tool 1, a piece of garment 31 and strings 32 connecting the tool 1 to the piece of garment 31. The piece of garment 31 may be e.g. a waistcoat as in figure 9, a jacket, a belt, a chest harness or the like. The strings 32 may be connected to the tool 1 and to the piece of garment 31 by rings or loops 33, 34, for example. Thus, the tool 1 can be hung to the piece of garment 31 when the piece of garment 31 is worn by a user during inspection. This allows the user to have free hands when there is a need to change position for inspection of another part of the heat shield, which is extremely convenient in such a narrow space as a combustion chamber of a gas turbine.

It is finally apparent that changes and variations may be made to the gas turbine and method described and illustrated without departing from the scope of protection of the accompanying claims.

In particular, it is understood that any one of the tools described may be used in the kit of figure 16

## Claims

1. An inspection-aid kit comprising a portable inspection-aid tool for aiding inspection of combustion chambers of gas turbines, the inspection-aid tool (1) comprising:
a frame (2), internally delimiting an inspection window (8) ;
an image-capture assembly (3; 3'), connected to the frame (2) and oriented to capture images through the inspection window (8);
a plurality of light sources (18) attached to an inner surface of the frame (2) around the inspection window (8) and configured to directionally emit light in accordance with a dark-field illumination pattern out of the inspection window (8) and away from the image-capture assembly (3; 3');
an on-board control unit (5), configured to selectively activate the light sources (18) and to synchronize image-capture of the image-capture assembly (3; 3') with activation of the light sources (18); and
a hand-hold portion (7; 107; 207; 307) for hold by a user;
**characterized by** a piece of garment (31) and strings (32) connecting the inspection-aid tool (1) to the piece of garment (31), whereby the inspection-aid tool (1) can be hung to the piece of garment (31) when the piece of garment (31) is worn by a user.

2. The kit as claimed in claim 1, comprising a supporting structure (10; 110) connected to the frame (2) and configured to support the image-capture assembly (3; 3') in an inspection position, in which a view field of the image-capture assembly (3; 3') includes at least part of the inspection window (8).

3. The kit as claimed in claim 2, wherein the supporting structure (10; 110) comprises a mounting member (12; 112) and struts (11; 111) having opposite ends connected to the frame (2) and to the mounting member (12; 112), and wherein the image-capture assembly (3; 3') is connected to the mounting member (12; 112).

4. The kit according to claim 3, wherein the mounting member (112) is connected to the ends of the struts (111) so that the mounting member (112) is movable toward and away from the frame (2) between a retracted position, in which the mounting member (112) is closer to the frame (2), and an extracted position, in which the mounting member (112) is more distant from the frame (2) and the image-capture assembly (3) is in a position of use.

5. The kit according to any one of claims 2 to 4, comprising an on-board display (20) connected to the supporting structure (10; 110), wherein the on-board control unit (5) is configured to show images viewed by the image-capture assembly (3; 3') on the on-board display (20).

6. The kit according to claim 5, wherein the on-board display is connected to the supporting structure (10; 110) by a joint (22b; 122b; 222b) that allows rotation about a first rotation axis (R1) and a second rotation axis (R2), perpendicular to the first rotation axis (R1).

7. The kit according to claim 5 or 6, wherein the hand-hold portion (107; 207; 307) is configured to allow four-finger hold of the on-board display (20), thereby leaving user's thumb free for providing commands through command input items (20b; 20c).

8. The kit according to any one of claims 5 to 7, wherein the hand-hold portion (7; 107; 207; 307) comprises at least one of:
a handgrip (7) defined by a portion of the supporting structure (10);
a mounting plate (122a) and a hand-hole (107), in the form of an elongated through opening in the mounting plate (122a) that extend along a side of the on-board control unit (5) and is configured to allow a user to insert fingers and hold the on-board display (20) and the mounting plate (122a) by gripping a face of the mounting plate (122a) opposite to the on-board display (20);
a pocket (207) on a back surface (21a) of a casing (21) of the on-board control unit (5), wherein the pocket (207) is open along a side of the on-board control unit (5) and is configured to allow a user to insert fingers and hold the on-board control unit (5) by gripping a back face of the on-board control unit (5);
a mounting plate (322a) and a handle (307) on a face of the mounting plate (322a), wherein the handle (307) extends along sides of the mounting plate (322a) and of the on-board control unit (5) and is configured to allow a user to grip the handle (307) by index, middle, ring and little fingers;
a handle (407) on a face of the casing (21) of the on-board control unit (5), wherein the handle (307) extends along a side of the on-board control unit (5) and is configured to allow a user to grip the handle (407) by index, middle, ring and little fingers.

9. The kit according to any one of the preceding claims, wherein the image-capture assembly (3; 3') has an optical axis (O) and the light sources (18) are oriented to emit light in directions such that light reflected by an even surface perpendicular to the optical axis (O) is not received by the image-capture assembly (3; 3').

10. The kit according to claim 9, wherein the light sources (18) comprises LED sources and are arranged in a plurality of rings (19) around the inspection window (8), wherein the rings (19) of light sources (18) are located at respective axial positions according to the optical axis (O) and light sources (18) of each ring (19) are activatable independently of light sources (18) of the other rings (19).

11. The kit according to any one of the preceding claims, wherein the image-capture assembly (3; 3') comprises an image sensor (17) arranged to receive light through the inspection window (8).

12. The kit according to claim 11, wherein the image-capture assembly (3; 3') comprises a plurality of image sensors (17) arranged adjacent to one another to receive light through respective portions (P) of the inspection window (8), the portions (P) of the inspection window (8) being at least in part distinct from one another.

13. The kit according to any one of the preceding claims, comprising an orientation sensor (23) configured to detect orientation in space, wherein the wherein the on-board control unit (5) is configured to associate the inspection images (IMG) captured by the image-capture assembly (3; 3') with orientation data (OD) from the orientation sensor (23) at the time of capture.

14. The kit according to any one of the preceding claims, wherein the on-board control unit (5) comprises a communication module (25) configured for communication to the outside, in particular through wireless communication.

## Patentansprüche

1. Inspektionshilfe-Satz, der ein tragbares Inspektionshilfswerkzeug zur Unterstützung der Inspektion von Brennkammern von Gasturbinen umfasst, wobei das Inspektionshilfswerkzeug (1) umfasst:
einen Rahmen (2), der ein Inspektionsfenster (8) intern abgrenzt;
eine Bildaufnahmeanordnung (3; 3'), die mit dem Rahmen (2) verbunden ist und so ausgerichtet ist, dass sie Bilder durch das Inspektionsfenster (8) erfasst;
mehrere Lichtquellen (18), die an einer Innenfläche des Rahmens (2) um das Inspektionsfenster (8) herum angebracht sind und dazu konfiguriert sind, Licht gemäß einem Dunkelfeld-Beleuchtungsmuster gerichtet aus dem Inspektionsfenster (8) heraus und weg von der Bildaufnahmeanordnung (3; 3') zu emittieren;
eine eingebaute Steuereinheit (5), die dazu konfiguriert ist, die Lichtquellen (18) selektiv zu aktivieren und die Bilderfassung der Bildaufnahmeanordnung (3; 3') mit der Aktivierung der Lichtquellen (18) zu synchronisieren; und einen handgehaltenen Abschnitt (7; 107; 207; 307) zum Halten durch einen Benutzer;
**gekennzeichnet durch** ein Kleidungsstück (31) und Schnüre (32), die das Inspektionshilfswerkzeug (1) mit dem Kleidungsstück (31) verbinden, wodurch das Inspektionshilfswerkzeug (1) an das Kleidungsstück (31) gehängt werden kann, wenn das Kleidungsstück (31) von einem Benutzer getragen wird.

2. Satz nach Anspruch 1, der eine Stützstruktur (10; 110) umfasst, die mit dem Rahmen (2) verbunden ist und dazu konfiguriert ist, die Bildaufnahmeanordnung (3; 3') in einer Inspektionsposition zu stützen, in der ein Sichtfeld der Bildaufnahmeanordnung (3; 3') wenigstens einen Teil des Inspektionsfensters (8) enthält.

3. Satz nach Anspruch 2, wobei die Stützstruktur (10; 110) ein Montageelement (12; 112) und Streben (11; 111) aufweist, deren gegenüberliegende Enden mit dem Rahmen (2) und dem Montageelement (12; 112) verbunden sind, und wobei die Bildaufnahmeanordnung (3; 3') mit dem Montageelement (12; 112) verbunden ist.

4. Satz nach Anspruch 3, wobei das Montageelement (112) mit den Enden der Streben (111) verbunden ist, so dass das Montageelement (112) zwischen einer zurückgezogenen Position, in der sich das Montageelement (112) näher am Rahmen (2) befindet, und einer herausgezogenen Position, in der sich das Montageelement (112) weiter vom Rahmen (2) entfernt befindet und die Bildaufnahmeanordnung (3) sich in einer Gebrauchsposition befindet, auf den Rahmen (2) zu und von diesem weg bewegt werden kann.

5. Satz nach einem der Ansprüche 2 bis 4, der eine eingebaute Anzeigeeinrichtung (20) umfasst, die mit der Stützstruktur (10; 110) verbunden ist, wobei die eingebaute Steuereinheit (5) dazu konfiguriert ist, Bilder, die von der Bildaufnahmeanordnung (3; 3') erfasst werden, auf der eingebauten Anzeigeeinrichtung (20) anzuzeigen.

6. Satz nach Anspruch 5, wobei die eingebaute Anzeigeeinrichtung mit der Stützstruktur (10; 110) durch ein Gelenk (22b; 122b; 222b) verbunden ist, das eine Drehung um eine erste Drehachse (R1) und eine zweite Drehachse (R2), die senkrecht zur ersten Drehachse (R1) steht, ermöglicht.

7. Satz nach Anspruch 5 oder 6, wobei der handgehaltene Abschnitt (107; 207; 307) dazu konfiguriert ist, das Halten der eingebauten Anzeigeeinrichtung (20) mit vier Fingern zu ermöglichen, wodurch der Daumen des Benutzers frei bleibt, um Befehle über Befehlseingabeelemente (20b; 20c) zu erteilen.

8. Satz nach einem der Ansprüche 5 bis 7, wobei der handgehaltene Abschnitt (7; 107; 207; 307) wenigstens eines umfasst von:
einem Handgriff (7), der durch einen Abschnitt der Stützstruktur (10) definiert ist;
eine Montageplatte (122a) und ein Handloch (107) in Form einer länglichen Durchgangsöffnung in der Montageplatte (122a), die sich entlang einer Seite der eingebauten Steuereinheit (5) erstreckt und dazu konfiguriert ist,
einem Benutzer das Einführen von Fingern und das Halten der eingebauten Anzeigeeinrichtung (20) und der Montageplatte (122a) zu ermöglichen, indem er eine Fläche der Montageplatte (122a) gegenüber der eingebauten Anzeigeeinrichtung (20) ergreift;
eine Tasche (207) auf einer Rückseite (21a) eines Gehäuses (21) der eingebauten Steuereinheit (5), wobei die Tasche (207) entlang einer Seite der eingebauten Steuereinheit (5) offen ist und dazu konfiguriert ist, einem Benutzer zu ermöglichen, Finger einzuführen und die eingebaute Steuereinheit (5) zu halten, indem er eine Rückseite der eingebauten Steuereinheit (5) ergreift;
eine Montageplatte (322a) und einen Griff (307) auf einer Fläche der Montageplatte (322a), wobei sich der Griff (307) entlang der Seiten der Montageplatte (322a) und der eingebauten Steuereinheit (5) erstreckt und dazu konfiguriert ist, einem Benutzer zu ermöglichen, den Griff (307) mit dem Zeige-, Mittel-, Ring- und kleinen Finger zu greifen;
einen Griff (407) auf einer Fläche des Gehäuses (21) der eingebauten Steuereinheit (5), wobei sich der Griff (307) entlang einer Seite der eingebauten Steuereinheit (5) erstreckt und dazu konfiguriert ist, einem Benutzer zu ermöglichen, den Griff (407) mit dem Zeige-, Mittel-, Ring- und kleinen Finger zu greifen.

9. Satz nach einem der vorangehenden Ansprüche, wobei die Bildaufnahmeanordnung (3; 3') eine optische Achse (0) aufweist und die Lichtquellen (18) so ausgerichtet sind, dass sie Licht in solche Richtungen emittieren, dass Licht, das von einer ebenen Fläche senkrecht zur optischen Achse (0) reflektiert wird, nicht von der Bildaufnahmeanordnung (3; 3') empfangen wird.

10. Satz nach Anspruch 9, wobei die Lichtquellen (18) LED-Quellen umfassen und in einer Vielzahl von Ringen (19) um das Inspektionsfenster (8L) herum angeordnet sind, wobei die Ringe (19) der Lichtquellen (18) an entsprechenden axialen Positionen entlang der optischen Achse (0) angeordnet sind und die Lichtquellen (18) jedes Rings (19) unabhängig von den Lichtquellen (18) der anderen Ringe (19) aktivierbar sind.

11. Satz nach einem der vorangehenden Ansprüche, wobei die Bildaufnahmeanordnung (3; 3') einen Bildsensor (17) umfasst, der dazu eingerichtet ist, Licht durch das Inspektionsfenster (8) zu empfangen.

12. Satz nach Anspruch 11, wobei die Bildaufnahmeanordnung (3; 3') eine Vielzahl von Bildsensoren (17) umfasst, die benachbart zueinander angeordnet sind, um Licht durch entsprechende Abschnitte (P) des Inspektionsfensters (8) zu empfangen, wobei die Abschnitte (P) des Inspektionsfensters (8) wenigstens zum Teil voneinander verschieden sind.

13. Satz nach einem der vorangehenden Ansprüche, der einen Ausrichtungssensor (23) umfasst, der dazu konfiguriert ist, die Ausrichtung im Raum zu erfassen, wobei die eingebaute Steuereinheit (5) dazu konfiguriert ist, die von der Bildaufnahmeanordnung (3; 3') erfassten Inspektionsbilder (IMG) zum Zeitpunkt der Erfassung mit Ausrichtungsdaten (OD) vom Ausrichtungssensor (23) zu verknüpfen.

14. Satz nach einem der vorangehenden Ansprüche, wobei die eingebaute Steuereinheit (5) ein Kommunikationsmodul (25) umfasst, das dazu konfiguriert ist, mit der Außenwelt zu kommunizieren, insbesondere über drahtlose Kommunikation.

## Revendications

1. Kit d'aide à l'inspection comprenant un outil portable d'aide à l'inspection pour faciliter l'inspection des chambres de combustion de turbines à gaz, l'outil d'aide à l'inspection (1) comprenant :
un cadre (2), délimitant intérieurement une fenêtre d'inspection (8) ;
un ensemble de capture d'images (3 ; 3), relié au cadre (2) et orienté de manière à capturer des images à travers la fenêtre d'inspection (8) ;
plusieurs sources lumineuses (18) fixées à une surface intérieure du cadre (2) autour de la fenêtre d'inspection (8) et configurées pour émettre de manière directionnelle de la lumière selon un modèle d'illumination en champ sombre hors de la fenêtre d'inspection (8) et loin de l'ensemble de capture d'images (3 ; 3) ;
une unité de commande embarquée (5), configurée pour activer sélectivement les sources lumineuses (18) et pour synchroniser la capture d'images de l'ensemble de capture d'images (3 ; 3') avec l'activation des sources lumineuses (18) ; et
une partie de poignée (7 ; 107 ; 207 ; 307) destinée à être tenue par un utilisateur ;
**caractérisé par** une pièce de vêtement (31) et des ficelles (32) reliant l'outil d'aide à l'inspection (1) à la pièce de vêtement (31), moyennant quoi l'outil d'aide à l'inspection (1) peut être accroché à la pièce de vêtement (31) lorsque la pièce de vêtement (31) est portée par un utilisateur.

2. Kit selon la revendication 1, comprenant une structure de support (10 ; 110) reliée au cadre (2) et configurée pour supporter l'ensemble de capture d'images (3 ; 3') dans une position d'inspection, dans lequel un champ de vision de l'ensemble de capture d'images (3 ; 3') comprend au moins une partie de la fenêtre d'inspection (8).

3. Kit selon la revendication 2, dans lequel la structure de support (10 ; 110) comprend un élément de montage (12 ; 112) et des entretoises (11 ; 111) dont les extrémités opposées sont reliées au cadre (2) et à l'élément de montage (12 ; 112), et dans lequel l'ensemble de capture d'images (3 ; 3') est relié à l'élément de montage (12 ; 112).

4. Kit selon la revendication 3, dans lequel l'élément de montage (112) est relié aux extrémités des montants (111) de manière à ce que l'élément de montage (112) puisse être déplacé vers et loin du cadre (2) entre une position rétractée, dans laquelle l'élément de montage (112) est plus proche du cadre (2), et une position extraite, dans laquelle l'élément de montage (112) est plus éloigné du cadre (2) et l'ensemble de capture d'images (3) est dans une position d'utilisation.

5. Kit selon l'une quelconque des revendications 2 à 4, comprenant un écran embarqué (20) relié à la structure de support (10 ; 110), dans lequel l'unité de commande embarquée (5) est configurée pour afficher les images visualisées par l'ensemble de capture d'images (3 ; 3') sur l'écran embarqué (20).

6. Kit selon la revendication 5, dans lequel l'écran embarqué est relié à la structure de support (10 ; 110) par une articulation (22b ; 122b ; 222b) qui permet la rotation autour d'un premier axe de rotation (R1) et d'un second axe de rotation (R2), perpendiculaire au premier axe de rotation (R1).

7. Kit selon la revendication 5 ou 6, dans lequel la partie de poignée (107 ; 207 ; 307) est configurée pour permettre une prise à quatre doigts de l'écran de bord (20), en laissant ainsi le pouce de l'utilisateur libre pour fournir des commandes par l'intermédiaire des éléments d'entrée de commande (20b ; 20c).

8. Kit selon l'une quelconque des revendications 5 à 7, dans lequel la partie de poignée (7 ; 107 ; 207 ; 307) comprend au moins l'un des éléments suivants :
une poignée (7) définie par une partie de la structure de support (10) ;
une plaque de montage (122a) et un trou de main (107), sous la forme d'une ouverture allongée dans la plaque de montage (122a) qui s'étend le long d'un côté de l'unité de commande embarquée (5) et est configurée pour permettre à un utilisateur d'insérer ses doigts et de tenir l'écran embarqué (20) et la plaque de montage (122a) en saisissant une face de la plaque de montage (122a) opposée à l'écran embarqué (20) ;
une poche (207) sur une surface arrière (21a) d'un boîtier (21) de l'unité de commande embarquée (5), dans lequel la poche (207) est ouverte le long d'un côté de l'unité de commande embarquée (5) et est configurée pour permettre à un utilisateur d'insérer ses doigts et de tenir l'unité de commande embarquée (5) en saisissant une face arrière de l'unité de commande embarquée (5) ;
une plaque de montage (322a) et une poignée (307) sur une face de la plaque de montage (322a), dans lequel la poignée (307) s'étend le long des côtés de la plaque de montage (322a) et de l'unité de commande embarquée (5) et est configurée pour permettre à un utilisateur de saisir la poignée (307) par l'index, le majeur, l'annulaire et l'auriculaire ;
une poignée (407) sur une face du boîtier (21) de l'unité de commande embarquée (5), dans lequel la poignée (307) s'étend le long d'un côté de l'unité de commande embarquée (5) et est configurée pour permettre à un utilisateur de saisir la poignée (407) par l'index, le majeur, l'annulaire et l'auriculaire.

9. Kit selon l'une quelconque des revendications précédentes, dans lequel l'ensemble de capture d'image (3 ; 3') présente un axe optique (0) et les sources lumineuses (18) sont orientées pour émettre de la lumière dans des directions telles que la lumière réfléchie par une surface plane perpendiculaire à l'axe optique (O) n'est pas reçue par l'ensemble de capture d'image (3 ; 3').

10. Kit selon la revendication 9, dans lequel les sources lumineuses (18) comprennent des sources LED et sont disposées en plusieurs anneaux (19) autour de la fenêtre d'inspection (8), dans lequel les anneaux (19) des sources lumineuses (18) sont situés au niveau de positions axiales respectives selon l'axe optique (O) et les sources lumineuses (18) de chaque anneau (19) peuvent être activées indépendamment des sources lumineuses (18) des autres anneaux (19).

11. Kit selon l'une quelconque des revendications précédentes, dans lequel l'ensemble de capture d'image (3 ; 3) comprend un capteur d'image (17) conçu pour recevoir de la lumière à travers la fenêtre d'inspection (8).

12. Kit selon la revendication 11, dans lequel l'ensemble de capture d'images (3 ; 3) comprend plusieurs capteurs d'images (17) disposés les uns à côté des autres pour recevoir de la lumière à travers des parties (P) respectives de la fenêtre d'inspection (8), les parties (P) de la fenêtre d'inspection (8) étant au moins en partie distinctes les unes des autres.

13. Kit selon l'une quelconque des revendications précédentes, comprenant un capteur d'orientation (23) configuré pour détecter l'orientation dans l'espace, dans lequel l'unité de contrôle embarquée (5) est configurée pour associer les images d'inspection (IMG) capturées par l'ensemble de capture d'images (3 ; 3') avec les données d'orientation (OD) provenant du capteur d'orientation (23) au moment de la capture.

14. Kit selon l'une quelconque des revendications précédentes, dans lequel l'unité de contrôle embarquée (5) comprend un module de communication (25) configuré pour communiquer avec l'extérieur, notamment par le biais d'une communication sans fil.
